# EUROPÄISCHE PATENTSCHRIFT

(11) **EP 0 411 188 B1**
(45) Veröffentlichungstag und Bekanntmachung des Hinweises auf die Patenterteilung: **01.03.1995**
(21) Anmeldenummer: 89114376.0
(22) Anmeldetag: 03.08.1989
(51) Int. Cl.: H04B 10/08, H04L 1/24

(54) **Verfahren zur Überwachung des Betriebszustandes einer elektrooptischen Übertragungseinrichtung und Schaltungsanordnung zur Durchführung des Verfahrens**
Method for supervising the operational state of an electro-optical transmission device, and circuitry for carrying out the method
Méthode pour la surveillance de l'état de fonctionnement d'un dispositif de transmission électro-optique et circuit pour la mise en oeuvre

(43) Veröffentlichungstag der Anmeldung: 06.02.1991
(73) Patentinhaber: SIEMENS AKTIENGESELLSCHAFT, 80333 München (DE)
(72) Erfinder: Grallert, Hans Joachim, Dr.-Ing., D-8038 Gröbenzell (DE)

(56) Entgegenhaltungen:
- FR-A- 2 568 431
- GB-A- 2 045 954
- PATENT ABSTRACTS OF JAPAN, Band 10, Nr. 113 (E-399)[2170], 26. April 1986;& JP-A-60 248 051 (NIPPON DENKI)
- PATENT ABSTRACTS OF JAPAN, Band 7, Nr. 88 (E-170)[1233], 12. April 1983;& JP-A-58 15 351 (ANDOU DENKI)

## Beschreibung

Die Erfindung bezieht sich auf ein wie im Oberbegriff des Patentanspruchs 1 angegebenes Verfahren und eine Schaltungsanordnung zur Durchführung des Verfahrens.

Ein derartiges Verfahren ist bereits aus der FR-A-2 568 431 bekannt. Das bekannte Verfahren dient zur Überwachung des Betriebszustandes einer elektrooptischen Übertragungseinrichtung zum Übertragen von Digitalsignalen. Die Übertragungseinrichtung enthält eine Sendeeinrichtung mit einem elektrooptischen Wandler, einem Lichtwellenleiter und eine Empfangseinrichtung mit einem optoelektrischen Wandler. An den optoelektrischen Wandler ist ein elektrischer Verstärker angeschlossen. In der Empfangseinrichtung werden in vorgegebenen Zeitabständen Meßwerte gewonnen, die jeweils ein Maß für den elektrischen Signalpegel sind. Ein Speicher speichert jeweils eine vorgegebene Zahl von zuletzt gewonnenen Meßwerten. Der Inhalt des Speichers wird periodisch daraufhin untersucht, ob sich zu aufeinanderfolgenden Zeitpunkten gehörende Meßwerte in einem Maße voneinander unterscheiden, das einen vorgegebenen Betrag übersteigt. Bei Feststellung eines den vorgegebenen Betrag übersteigenden Unterschieds wird eine Fehlermeldung ausgelöst.

Das bekannte Verfahren geht davon aus, daß sprunghafte Änderungen des Empfangspegels ein Kriterium dafür sind, daß die elektrooptische Verbindung gestört ist. Sprunghafte Änderungen des Emfangspegels lösen einen Alarm aus, der auf eine Störung der Verbindung, insbesondere auf ein unbefugtes Auskoppeln von Übertragungssignalen hinweist.

Weiterhin sieht ein aus der Zeitschrift Telcom Report Spezial: "Multiplex- und Leitungseinrichtungen", Siemens, März 1987, Seiten 97 und 98 bekanntes Verfahren vor, in optischen Fernübertragungssystemen die Übertragungseigenschaften von Digitalstrecken im empfangenden Leitungsendgerät zu überwachen und beim Überschreiten vorgegebener Schwellen optischen und elektrischen Alarm zu geben.

In elektrooptischen Übertragungseinrichtungen zum Übertragen von PCM-Signalen werden üblicherweise optische Empfänger verwendet, bei denen das optische Eingangssignal mittels einer Fotodiode in ein elektrisches Signal gewandelt, verstärkt und in einem Zeit- und Amplitudenentscheider in ein serielles Datensignal umgesetzt wird. Dabei kann man in einer nachfolgenden Schaltungseinheit das Vorhandensein eines Rahmenkennwortes kontrollieren und das Fehlen auswertbarer Rahmenkennwörter als Ausfall der Synchronisation melden.

Andererseits kann man durch Abgriff an verschiedenen Stellen im elektrischen Signalweg oder in der Verstärkungsregelung das Eingangssignal beobachten und durch Vergleich mit einem Schwellwert entscheiden, ob noch ein optisches Eingangssignal anliegt.

Bei vergleichsweise sehr langen Übertragungsleitungen und damit geringem Signalpegel am Eingang des optoelektrischen Wandlers der Empfangseinrichtung ist der Aufbau und Abgleich solcher Schwellwertvergleicher relativ aufwendig, da der Unterschied zwischen den Zuständen "Licht" und "kein Licht" sehr klein ist. Außerdem ist der Pegel am Eingang des optoelektrischen Wandlers abhängig von witterungsbedingten Einflüssen auf die Kabelanlage sowie von Veränderungen im Sender, wie sie z. B. durch die Kennlinie eines Lasers bedingt sein können. Bei geregelten Empfangsverstärkern kommt hinzu, daß durch Ausfall des Eingangssignals die maximale Verstärkung eingestellt und infolge Rauschen am Verstärkerausgang ein Signal vorgetäuscht werden kann.

Im Hinblick auf die genannten Schwierigkeiten kann man bei der Überwachung des Betriebszustandes vorsehen, daß nur das Vorhandensein des Digitalsignals bzw. des Rahmenkennungswortes in der Empfangseinrichtung geprüft wird. Ein fehlendes Rahmenkennungswort deutet dann auf den Zustand "asynchron" hin. Dabei kann aber nicht sicher entschieden werden, ob z. B. die Übertragungsstrecke unterbrochen oder die Sendeeinrichtung defekt ist.

Aufgabe der Erfindung ist es, ein Verfahren der eingangs genannten Art und eine Schaltungsanordnung zur Durchführung des Verfahrens anzugeben, die es gestatten, bei der Überwachung des Betriebszustandes der Übertragungseinrichtung den Zustand "kein Licht am Signaleingang der Empfangseinrichtung" auf möglichst einfache und sichere Weise zu erkennen.

Eine Erkenntnis im Rahmen der Erfindung besteht darin, daß man bei der Auswertung des Empfangssignals die insbesondere bei sehr kleinen Empfangsleistungen problematischen langsamen Pegeländerungen dadurch elimenieren kann, daß man die beobachtete Meßgröße nicht mit einem festen Vergleichswert vergleicht, sondern bei Ausfall des Digitalsignals für einen kurzen vorhergehenden Zeitraum die Änderung des optischen Empfangssignals betrachtet. Diese Erkenntnis geht davon aus, daß mit einem Ausfall des optischen Empfangssignals zwangsläufig ein Ausfall des Digitalsignals, insbesondere der Synchronisation verbunden ist und daß ein Ausfall des Digitalsignals bzw. der Synchronisation jedoch nur ein Indiz für den völligen Ausfall der optischen Übertragungsleistung ist, da auch ein langsames Absinken des optischen Empfangspegels über einen längeren Zeitraum schließlich dazu führen kann, daß die optische Empfangsleistung für die Synchronisation nicht mehr ausreicht.

Ausgehend von dieser Erkenntnis wird die gestellte Aufgabe gemäß der Erfindung durch die im kennzeichnenden Teil des Patentanspruchs 1 angegebenen Verfahrensschritte gelöst. Als Kriterium für einen Ausfall der Digitalsignale dient dabei insbesondere das Kriterium "Ausfall der Synchronisation". Der Speicher kann ein Analogsignal- oder ein Digitalsignalspeicher sein.

Durch die erfindungsgemäßen Verfahrensschritte ergibt sich der Vorteil, daß auch bei vergleichsweise kleinen Unterschieden des optischsen Empfangspegels eine sichere Unterscheidung zwischen den Zuständen "Licht" und "kein Licht" möglich ist.

Wesentlich für die Feststellung eines für den Ausfall der Synchronisation ursächlichen Absinkens des Empfangspegels (Pegelsprung) ist der Vergleich zwischen einem vor und einem nach dem Pegelsprung gemessenen Wert. Dabei genügt es, vor dem Ausfall der Synchronisation ermittelte Meßwerte zu speichern und mit einem nach Ausfall der Synchronisation ermittelten und nicht im Speicher gespeicherten Meßwert zu vergleichen. Zweckmäßigerweise wird jedoch auch wenigstens ein nach Ausfall der Synchronisation ermittelter Meßwert in die Speicherung einbezogen. Die Speicherung mehrerer Meßwerte stellt sicher, daß auch dann wenigstens ein Meßwert für den vor dem Pegelsprung liegenden Zeitraum gespeichert ist, wenn der zuletzt gespeicherte Meßwert - bedingt durch die unvermeidliche Zeitverzögerung der Meldung gegenüber deren Ursache - zufällig nach dem Pegelsprung und vor der Meldung des Ausfalls der Synchronisation liegt.

Ein Verfahren, das auch den nach Ausfall der Digitalsignale ermittelten Meßwert in die Speicherung einbezieht, geht aus Anspruch 2 hervor.

Eine weitere vorteilhafte Möglichkeit, die Speicherung des auf den Ausfall der Synchronisation folgenden Meßwert sicherzustellen, ist in Anspruch 3 angegeben.

Eine größere Freiheit bei der Bemessung der vorgegebenen Zeitabstände und der Auswertezeit läßt sich mit den Verfahrensschritten nach Anspruch 4 gewinnen.

Eine zweckmäßige Schaltungsanordnung zur Durchführung des erfindungsgemäßen Verfahrens geht aus Anspruch 5 hervor.

Zweckmäßige weitere Ausgestaltungen der Schaltungsanordnung zur Durchführung des Verfahrens ergeben sich aus den Ansprüchen 6 bis 10.

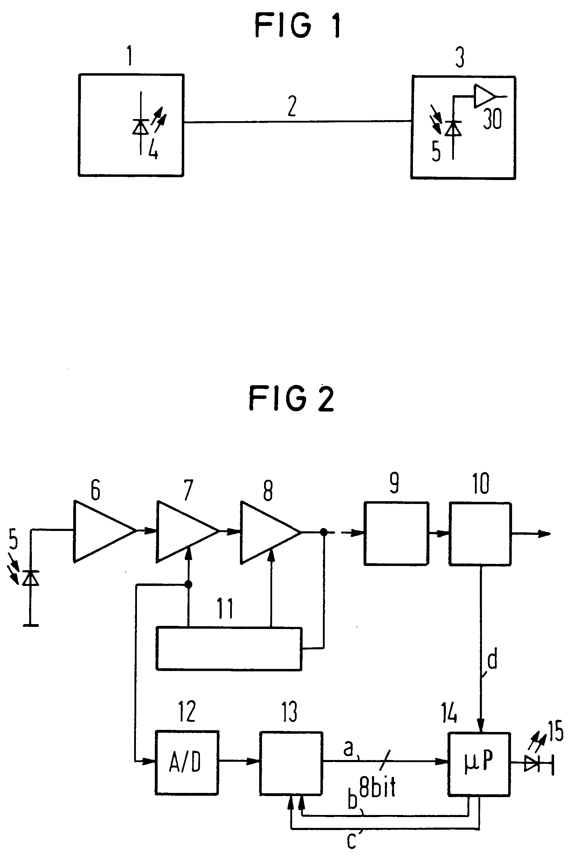

Die Erfindung wird anhand der in Figur 1 gezeigten bekannten Anordnung und anhand des in Figur 2 gezeigten Ausführungsbeispieles näher erläutert.

Es zeigen
- Fig. 1: eine Übertragungseinrichtung mit einer Sendeeinrichtung und einer Empfangseinrichtung und
- Fig. 2: eine Empfangseinrichtung mit einer Vorrichtung zur Überwachung des optischen Empfangspegels.

Figur 1 zeigt eine elektrooptische Übertragungseinrichtung, die eine Sendeeinrichtung mit einem elektrooptischen Wandler und eine Empfangseinrichtung mit einem optoelektrischen Wandler und einem daran angeschlossenen elektrischen Verstärker enthält. Derartige Übertragungseinrichtungen sind bei der Übertragung von PCM-Signalen üblich.

Figur 2 zeigt Einzelheiten der Empfangseinrichtung. Die Empfangseinrichtung enthält den optoelektrischen Wandler 5, an den die Stufen 6, 7 und 8 eines elektrischen Verstärkers angeschlossen sind. Von den auf den Verstärker 6, 7, 8 folgenden üblichen Anordnungen sind nur der Entscheider 9 und die Vorrichtung zur Rahmenerkennung 10 dargestellt.

Die Stufen 7 und 8 werden mit Hilfe der Vorrichtung 11 zur Verstärkungsregelung derart gesteuert, daß sich am Ausgang des elektrischen Verstärkers ein konstanter Signalpegel ergibt. Die Vorrichtung zur Verstärkungsregelung 11 vergleicht in bekannter Weise das Ausgangssignal des elektrischen Verstärkers mit einem Sollwert und gibt an die Stufen 7 und 8 des Verstärkers entsprechende Stellspannungen ab.

Die Empfangseinrichtung enthält außerdem eine Vorrichtung zur Überwachung des Betriebszustandes der elektrooptischen Übertragungseinrichtung.

Ausgehend davon, daß die übertragenden PCM-Signale Rahmenkennungswörter enthalten und bei einem Ausfall des Empfangssignals kein Rahmenkennungswort vorhanden ist, wird in der Empfangseinrichtung das elektrische Empfangssignal auf das Vorhandensein des Rahmenkennungswortes hin überwacht. Dabei wird ein Ausfall der Synchronisation gemeldet.

Zu diesem Zweck ist die Vorrichtung 10 zur Rahmenerkennung an einen auf den Verstärker 6, 7, 8 folgenden Entscheider 9 angeschlossen.

Ferner werden in der Empfangseinrichtung 3 in vorgegebenen Zeitabständen Meßwerte gewonnen, die jeweils ein Maß für den elektrischen Signalpegel sind. Als derartiger Meßwert dient die der Verstärkerstufe 7 zugeführte Stellspannung. Anstelle dieser Stellspannung kann der an einer Stelle des Signalweges gemessene Signalpegel selbst oder eine Größe gemessen werden, die ein Kriterium für den elektrischen Signalpegel ist.

Die genannte Stellspannung wird im Eingang des Analog-Digitalwandlers zugeführt. An den Ausgang des Analog-Digitalwandlers 12 ist der Speicher 13 angeschlossen. Der Mikroprozessor 14 ist über die acht-bit breite Leitung a an den Ausgang des Speichers 13 und über die Steuerleitung d mit einem Steuereingang an die Vorrichtung 10 zur Rahmenerkennung angeschlossen. Zwischen dem Steuereingang der Verstärkerstufe 7 und dem Speicher 13 ist der Analog-Digitalwandler 12 angeordnet. Außerdem ist ein Übernahmeimpulseingang des Speichers 13 über die Steuerleitung c an einen Übernahmeimpulsausgang des Mikroprozessors 14 geführt.

Der Mikroprozessor 14 ist ferner mit einem Starteingang über die Steuerleitung d an die Vorrichtung 10 zur Rahmenerkennung und mit einem Dateneingang an den Speicher 13 angeschlossen. Über die Steuerleitung b kann der Mikroprozessor 14 den Speicher 13 zur Übermittlung der Speicherinhalte an den Mikroprozessor 14 veranlassen.

Das am Signaleingang anliegende optische Eingangssignal wird mittels einer Fotodiode, insbesondere einer PIN-Diode oder APD in ein elektrisches Signal gewandelt, verstärkt und in einem Zeit- und Amplitudenentscheider 9 in ein serielles Digitalsignal umgesetzt. Die nachfolgende Synchronisationseinheit 10 enthält eine Schaltungseinheit, die das Vorhandensein eines Rahmenkennworts kontrolliert.

Die Überwachungseinrichtung der in Figur 2 gezeigten Empfangseinrichtung ermöglicht auf einfache und sichere Weise die Erkennung des Zustandes "kein Licht" am Signaleingang der Empfangseinrichtung. Die dem elektrischen Signalpegel entsprechende Stellspannung wird in der Empfangseinrichtung in kurzen Zeitabständen Δ t abgetastet, mittels des Analog-Digitalwandlers 12 in einen Digitalwert P (tₙ) umgesetzt und im Speicher 13 abgelegt.

Andere geeignete Stellen zur Abtastung des Signalpegels oder einer dem Signalpegel entsprechenden Größe sind insbesondere die Ausgänge der Verstärkerstufen 7 und 8 oder die Beobachtung des Taktpegels mittels eines Filters.

Der Analog-Digitalwandler 12 ist derart gewählt, daß seine Auflösung ausreicht, die Meßwertdifferenzen bei langsamen Pegeländerungen einerseits und bei einer Unterbrechung andererseits sicher voneinander zu unterscheiden.

Zur Feststellung eines für den Ausfall der Synchronisation ursächlichen Pegelsprungs werden auf die Meldung "asynchron" hier ein vor und ein nach dem Pegelsprung gemessener Wert miteinander verglichen. Zweckmäßigerweise wird zu diesem Zweck auch der nach Ausfall der Synchronisation ermittelte Meßwert im Speicher 13 gespeichert.

Bei einer vorteilhaften Variante des Verfahrens ist die zeitliche Verzögerung der Meldung des Zustands "asynchron"größer als der zeitliche Abstand zwischen zwei Abtastschritten.

Meldet die Vorrichtung 10 zur Erkennung des Rahmenkennwortes den Zustand "asynchron", dann werden die kurzzeitig vor dieser Meldung gespeicherten Digitalwerte P auf einen Signalabfall hin untersucht. Gegebenenfalls kann man die Meldung "asynchron" so verzögern, daß die genannte Bedingung erfüllt ist.

Das Speichern der Meßwerte wird abgebrochen, nachdem beim Mikroprozessor die Meldung "asynchron" eingegangen ist. Ist der zeitliche Abstand der Abtastimpulse so klein, daß bei dem Zeitpunkt, zu dem die Meldung "asynchron" beim Mikroprozessor eingeht, mit Sicherheit bereits wenigstens ein Meßwert erfaßt ist, der zu dem nach der Zustandsänderung gelegenen Zeitraum gehört, so kann das Speichern der Meßwerte sofort abgebrochen werden.

Andernfalls kann es zweckmäßig sein, die Speicherung des auf den tatsächlichen Ausfall der Synchronisation folgenden Meßwertes dadurch sicherzustellen, daß die vorgegebenen Zeitabstände, in denen die Meßwerte gespeichert werden und die Auswertezeit, die zwischen dem Ausfall der Synchronisation und dessen Meldung verstreicht, derart gewählt sind, daß bei Meldung des Ausfalls der Synchronisation wenigstens ein nach dem Ausfall der Synchronisation gemessener Meßwert gespeichert ist.

Andererseits kann man durch die Meldung eines Ausfalls der Synchronisation ein sofortiges Abtasten des Meßwertes auslösen und so eine größere Freiheit bei der Bemessung der vorgegebenen Zeitabstände und der Auswertezeit gewinnen.

Durch die Speicherung mehrerer zum Zeitraum vor dem eventuellen Pegelsprung gehörender Meßwerte im Speicher 13 wird sichergestellt, daß auch dann wenigstens ein Meßwert für diesen Zeitraum für die Auswertung zur Verfügung steht, wenn der zuletzt gespeicherte Meßwert - bedingt durch die unvermeidliche Zeitverzögerung der Meldung "asynchron" gegenüber dem tatsächlichen Übergang der Empfangseinrichtung in den asynchronen Zustand - zufällig nach der Zustandsänderung bzw. nach dem Pegelsprung und vor der Meldung des Ausfalls der Synchronisation liegt.

Meldet die Vorrichtung 10 zur Erkennung des Rahmenkennungswortes den Zustand "asynchron", dann werden die gespeicherten Digitalwerte P auf einen Signalabfall hin untersucht.

Der Zustand "asynchron" bei festgestelltem Signalpegelabfall signalisiert eine Unterbrechung der Leitung. "Asynchron" ohne Signalabfall weist auf einen Fehler in der Sendeeinrichtung bzw. in den nicht überwachten Teilen der Empfangseinrichtung hin. Im ersten Fall wird eine Fehlermeldung erster Art -, im zweiten Fall eine Fehlermeldung zweiter Art gemeldet.

Der zeitliche Abstand für die Abtastung der Meßwerte liegt insbesondere im Bereich von Bruchteilen einer Sekunde bis wenigen Tagen. Bei einer bevorzugten Ausführungsform der Schaltungsanordnung beträgt der zeitliche Abstand für die Abtastung der Meßwerte etwa 1 sec. Die zeitliche Verzögerung zwischen dem Übergang der Empfangseinrichtung in den asynchronen Zustand und der entsprechenden Meldung kann etwa 500 »sec betragen.

Werden die Meßwerte am Ausgang einer geregelten Verstärkerstufe abgegriffen, so wird der zeitliche Abstand der Abtastungen zweckmäßigerweise kleiner als die Zeitkonstante der Verstärkungsregelung gewählt, da sonst das Rauschen am Ausgang die Messung verfälscht.

Die Sendeeinrichtung enthält zweckmäßigerweise einen Scambler und/oder einen Codierer, der einen Leitungscode, z.B. einen 5B6B Code verwendet. Die mittlere ausgesendete Lichtleistung ist daher konstant und in der Empfangseinrichtung wird die mittlere Lichtleistung auf einen konstanten Wert geregelt.

## Patentansprüche

1. Verfahren zur Überwachung des Betriebszustandes einer elektrooptischen Übertragungseinrichtung zum Übertragen von Digitalsignalen, die eine Sendeeinrichtung (1) mit einem elektrooptischen Wandler (4), einen Lichtwellenleiter (2) und eine Empfangseinrichtung (3) mit einem optoelektrischen Wandler (5) und einen daran angeschlossenen elektrischen Verstärker (6, 7, 8) enthält, wobei in der Empfangseinrichtung (3) in vorgegebenen Zeitabständen Meßwerte, die jeweils ein Maß für den elektrischen Signalpegel sind, gewonnen und derart in einem Speicher (13) gespeichert werden, daß jeweils eine vorgegebene Zahl von zuletzt gewonnenen Meßwerten gespeichert ist und wobei der Inhalt des Speichers (13) daraufhin untersucht wird, ob sich zu aufeinanderfolgenden Zeitpunkten gehörende Meßwerte in einem einen vorgegebenen Betrag übersteigenden Maße voneinander unterscheiden und bei Feststellung eines den vorgegebenen Betrag übersteigenden Unterschieds eine Fehlermeldung gemeldet wird,
**dadurch gekennzeichnet**,
daß am Ort der Empfangseinrichtung (3) das elektrische Empfangssignal auf das Vorhandensein auswertbarer Digitalsignale hin überwacht, ein Ausfall der Digitalsignale gemeldet, der Inhalt des Speichers (13) bei gemeldetem Fehlen der Digitalsignale untersucht und bei der Feststellung eines den vorgegebenen Betrag übersteigenden Unterschieds eine Fehlermeldung erster Art und andernfalls eine Fehlermeldung zweiter Art gemeldet wird.

2. Verfahren nach Anspruch 1,
**dadurch gekennzeichnet**,
daß das Speichern der Meßwerte im Speicher (13) erst nach dem Speichern eines Meßwertes abgebrochen wird, der zu einem auf den Ausfall der Digitalsignale folgenden Zeitpunkt gehört.

3. Verfahren nach Anspruch 1,
**dadurch gekennzeichnet**,
daß die vorgegebenen Zeitabstände, in denen die Meßwerte im Speicher (13) gespeichert werden und die Auswertezeit, die zwischen einem Ausfall der Digitalsignale und dessen Meldung verstreicht, derart bemessen sind, daß bei Meldung des Ausfalls der Digitalsignale wenigstens ein nach dem Ausfall der Digitalsignale gemessener Meßwert gespeichert ist.

4. Verfahren nach Anspruch 1,
**dadurch gekennzeichnet**,
daß durch die Meldung eines Ausfalls der Digitalsignale ein sofortiges Gewinnen und Speichern der Meßwerte im Speicher (13) ausgelöst wird.

5. Schaltungsanordnung zur Überwachung des Betriebszustandes einer elektrooptischen Übertragungseinrichtung zum Übertragen von Digitalsignalen, die eine Sendeeinrichtung (1) mit einem elektrooptischen Wandler (4), einen Lichtwellenleiter (2) und eine Empfangseinrichtung (3) mit einem optoelektrischen Wandler (5) und einen daran angeschlossenen elektrischen Verstärker (6, 7, 8) enthält, wobei die Empfangseinrichtung (3) eine durch einen Taktgeber steuerbare Meßeinrichtung zur Messung einer ein Maß für den elektrischen Signalpegel bildenden elektrischen Größe und einen an die Meßvorrichtung angeschlossenen, durch den Taktgeber steuerbaren Speicher (13) mit Speicherplätzen zum Speichern jeweils einer vorgegebenen Zahl von zuletzt gewonnenen Meßwerten in vorgegebenen Zeitabständen enthält und wobei die Empfangseinrichtung (3) eine Vorrichtung zum Untersuchen des Inhalts des Speichers (13) und zur Meldung einer Fehlermeldung bei Feststellung eines den vogegebenen Betrag übersteigenden Unterschieds der Inhalte von Speicherplätzen in einem einen vorgegebenen Betrag übersteigenden Maße von einem nach Beendigung der Speicherung gewonnenen Meßwert aufweist,
**dadurch gekennzeichnet**,
daß die Empfangseinrichtung (3) eine an den Verstärker (6, 7, 8) angeschlossene Vorrichtung (10) zur Rahmenerkennung enthält, die einen Meldeausgang zum Melden eines Ausfalls der Digitalsignale aufweist und daß die Empfangseinrichtung (3) eine durch die Vorrichtung (10) zur Rahmenerkennung startbare Auswertevorrichtung (14) zum Untersuchen des Inhalts des Speichers (13) bei einem gemeldeten Fehlen von Digitalsignalen mit Hilfe wenigstens eines Vergleichers und zum Abgeben einer Fehlermeldung erster Art bei einem bei der Untersuchung festgestellten, den vorgegebenen Betrag übersteigenden Unterschied und zum Abgeben einer Fehlermeldung zweiter Art im anderen Falle enthält.

6. Schaltungsanordnung nach Anspruch 5,
**dadurch gekennzeichnet**,
daß zwischen der Meßvorrichtung (11) und dem Speicher (13) ein Analog-Digitalwandler (12) angeordnet ist.

7. Schaltungsanordnung nach Anspruch 5 oder 6,
**dadurch gekennzeichnet**,
daß die Vorrichtung (10) zur Rahmenerkennung an einen auf den Verstärker (6, 7, 8) folgenden Entscheider (9) angeschlossen ist.

8. Schaltungsanordnung nach einem der Ansprüche 1 bis 7,
**dadurch gekennzeichnet**,
daß die Auswertevorrichtung einen Mikroprozessor (14) enthält, der mit einem Starteingang an die Vorrichtung (10) zur Rahmenerkennung und mit wenigstens einem Dateneingang an den Speicher (13) angeschlossen ist.

9. Schaltungsanordnung nach Anspruch 8,
**dadurch gekennzeichnet**,
daß ein Übernahmeimpulseingang des Speichers (13) an einen Übernahmeimpulsausgang des Mikroprozessors (14) angeschlossen ist.

## Claims

1. Method for monitoring the operational condition of an electro-optical transmission device for the transmission of digital signals, which transmission device contains a transmitting device (1) having an electro-optical transducer (4), an optical waveguide (2) and a receiving device (3) having an opto-electrical transducer (5) and an electrical amplifier (6, 7, 8) connected thereto, measured values, which are in each case a measure of the electric signal level, being obtained in the receiving device (3) at prescribed time intervals and stored in a store (13) in such a way that, in each case, a prescribed number of the last measured values obtained is stored and the contents of the store (13) thereupon being examined as to whether measured values belonging to successive points in time differ from each other to an extent exceeding a prescribed amount and, in the event of determining a difference exceeding the prescribed amount, a fault message being reported, characterized in that, at the location of the receiving device (3), the electric signal received is monitored for the presence of evaluable digital signals, a failure of the digital signals is reported, the content of the store (13) is examined in the event of a reported lack of digital signals and, in the event of a difference exceeding the prescribed amount being determined, a fault message of a first type is reported, and otherwise a fault message of a second type is reported.

2. Method according to Claim 1, characterized in that the storage of the measured values in the store (13) is not interrupted until after the storage of a measured value which belongs to a point in time following the failure of the digital signals.

3. Method according to Claim 1, characterized in that the prescribed time intervals at which the measured values are stored in the store (13), and the evaluation time which elapses between a failure of the digital signals and its reporting, are dimensioned in such a way that, upon reporting the failure of the digital signals, at least one measured value measured after the failure of the digital signals is stored.

4. Method according to Claim 1, characterized in that, by means of the reporting of a failure of the digital signals, immediate obtaining and storing of the measured values in the store (13) are triggered.

5. Circuit arrangement for monitoring the operational condition of an electro-optical transmission device for the transmission of digital signals, which contains a transmitting device (1) having an electro-optical transducer (4), an optical waveguide (2) and a receiving device (3) having an opto-electrical transducer (5) and an electrical amplifier (6, 7, 8) connected thereto, the receiving device (3) containing a measuring device, which can be controlled by a clock generator, for the measurement of an electrical quantity forming a measure of the electric signal level and a store (13), which can be controlled by the clock generator, connected to the measuring device and having storage locations for storing in each case a prescribed number of the last measured values obtained at prescribed time intervals, and the receiving device (3) having a device for examining the content of the store (13) and for reporting a fault message in the event of determining a difference, exceeding the prescribed amount, between the contents of memory locations and a measured value obtained after ending the storage to an extent exceeding a prescribed amount, characterized in that the receiving device (3) contains a device (10) for edge detection, connected to the amplifier (6, 7, 8), having a reporting output for reporting a failure of the digital signals, and in that the receiving device (3) contains an evaluation device (14), which can be started by the device (10) for edge detection, for examining the content of the store (13) in the event of a recorded lack of digital signals with the aid of at least one comparator and for outputting a fault message of a first type in the event of a difference determined in the examination and exceeding the prescribed amount and for outputting a fault message of a second type in the other case.

6. Circuit arrangement according to Claim 5, characterized in that an analog-digital converter (12) is arranged between the measuring device (11) and the store (13).

7. Circuit arrangement according to Claim 5 or 6, characterized in that the device (10) for edge detection is connected to a discriminator (9) downstream of the amplifier (6, 7, 8).

8. Circuit arrangement according to one of Claims 1 to 7, characterized in that the evaluation device contains a microprocessor (14) which is connected by means of a start input to the device (10) for edge detection and is connected by means of at least one data input to the store (13).

9. Circuit arrangement according to Claim 8, characterized in that a strobe pulse input of the store (13) is connected to a strobe pulse output of the microprocessor (14).

## Revendications

1. Procédé pour contrôler l'état de fonctionnement d'un dispositif de transmission électro-optique pour la transmission de signaux numériques, qui contient un dispositif d'émission (1) possédant un transducteur électro-optique (4), un guide d'ondes lumineuses (2) et un dispositif de réception (3) comportant un transducteur opto-électrique (5) et un amplificateur électrique (6,7,8) raccordé à ce transducteur, selon lequel on obtient des valeurs de mesure, qui constituent respectivement une mesure du niveau de signal électrique, pendant des intervalles de temps prescrits dans le dispositif de réception (3) et on mémorise ces valeurs de mesure dans une mémoire (13), de telle sorte que respectivement un nombre prescrit de valeurs de mesure obtenues en dernier lieu sont mémorisées, et selon lequel on examine ensuite le contenu de la mémoire (13) pour déterminer si des valeurs de mesure associées à des instants successifs différent les unes des autres d'une valeur dépassant une valeur prescrite, et si un message d'erreur est communiqué dans le cas de la détermination d'une différence dépassant la valeur prescrite, caractérisé par le fait qu'à l'emplacement du dispositif de réception (3), on contrôle le signal électrique de réception en ce qui concerne la présence de signaux numériques pouvant être évalués, on signale une absence des signaux numériques, on examine le contenu de la mémoire (13) dans le cas d'une absence signalée des signaux numériques et on communique un message d'erreur d'un premier type lorsque l'on constate qu'une différence dépasse la valeur prescrite, et sinon, on communique un message d'erreur d'un second type.

2. Procédé suivant la revendication 1, caractérisé par le fait que l'on mémorise la mémorisation des valeurs de mesure dans la mémoire (13) uniquement après la mémorisation d'une valeur de mesure, qui est associée à un instant qui succède à l'absence des signaux numériques.

3. Procédé suivant la revendication 1, caractérisé par le fait que les intervalles de temps prescrits, pendant lesquels on mémorise les valeurs de mesure dans la mémoire (13), et la durée d'évaluation, qui s'écoule entre une absence des signaux numériques et son signalement, sont dimensionnés de telle sorte que, lors du signalement de l'absence des signaux numériques, au moins une valeur de mesure mesurée après l'absence des signaux numériques est mémorisée.

4. Procédé suivant la revendication 1, caractérisé par le fait qu'une obtention et une mémorisation immédiates de la valeur de mesure dans la mémoire (13) sont déclenchées par le message d'une absence des signaux numériques.

5. Montage pour contrôler l'état de fonctionnement d'un dispositif de transmission électro-optique pour la transmission de signaux numériques, qui contient un dispositif d'émission (1) possédant un transducteur électro-optique (4), un guide d'ondes lumineuses (2) et un dispositif de réception (3) comportant un transducteur opto-électrique (5) et un amplificateur électrique (6,7,8) raccordé à ce transducteur, le dispositif de réception (3) contenant un dispositif de mesure, pouvant être commandé par un générateur de cadence et servant à mesurer une grandeur électrique formant une mesure pour le niveau du signal électrique, et une mémoire (13) qui est raccordée au dispositif de mesure, qui peut être commandée par le générateur de cadence et qui comporte des emplacements de mémoire servant à mémoriser un nombre prescrit de valeurs de mesure obtenues en dernier lieu, pendant des intervalles de temps prédéterminés, le dispositif de réception (3) comportant un dispositif pour examiner le contenu de la mémoire (13) et pour envoyer un message d'erreur lorsqu'il est constaté une différence, qui dépasse la valeur prescrite, entre les contenus d'emplacements de mémoire, dans une mesure dépassant une valeur prescrite, par rapport à une valeur de mesure obtenue à la fin de la mémorisation, caractérisé par le fait que le dispositif de réception (3) contient un dispositif (10), qui est raccordé à l'amplificateur (6,7,8), sert à réaliser l'identification de trames et possède une sortie de message servant à signaler une absence des signaux numériques, et que le dispositif de réception (3) contient un dispositif d'évaluation (14), qui peut être déclenché par le dispositif (10) pour l'identification de trames, qui est destiné à examiner le contenu de la mémoire (13) dans le cas d'une absence signalée de signaux numériques à l'aide d'au moins un comparateur, qui est destiné à fournir un message d'erreur du premier type lorsqu'il a été constaté lors de l'examen qu'une différence dépasse la valeur prescrite, et qui est destiné à founir un message d'erreur d'un second type, dans l'autre cas.

6. Montage suivant la revendication 5, caractérisé par le fait qu'un convertisseur analogique/numérique (12) est disposé entre le dispositif de mesure (11) et la mémoire (13).

7. Montage suivant la revendication 5 ou 6, caractérisé par le fait que le dispositif (10) pour l'identification de trames est raccordé à un dispositif de décision (9) qui est situé en aval de l'amplificateur (6,7,8).

8. Montage suivant l'une des revendications 1 à 7, caractérisé par le fait que le dispositif d'évaluation contient un microprocesseur (14), qui est raccordé, par une entrée de démarrage, au dispositif (10) d'identification de trames, et par au moins une entrée de données, à la mémoire (13).

9. Montage suivant la revendication 8, caractérisé par le fait qu'une entrée d'impulsions de transfert de la mémoire (13) est raccordée à une sortie d'impulsions de transfert du microprocesseur (14).
